Europäisches Patentamt

European Patent Office

Office européen des brevets

(19)

(11) **EP 0 706 975 A2**

(12) **EUROPEAN PATENT APPLICATION**

(43) Date of publication:
**17.04.1996 Bulletin 1996/16**

(51) Int Cl.$^6$: **C02F 1/70**

(21) Application number: **95830421.4**

(22) Date of filing: **09.10.1995**

(84) Designated Contracting States:
**CH DE ES FR GB LI PT SE**

(30) Priority: **11.10.1994 IT LI940010**

(71) Applicant: **Marti, Mario**
**I-57025 Livorno (IT)**

(72) Inventor: **Marti, Mario**
**I-57025 Livorno (IT)**

(74) Representative: **Bardini, Marco Luigi et al**
**c/o Società Italiana Brevetti S.p.A.**
**Corso dei Tintori, 25**
**I-50122 Firenze (IT)**

(54) **Method for the removal of Cr6+ compounds from waste materials**

(57)     A ferrous ($Fe^{2+}$) salt, in particular ferrous sulphate, is used at pH > 5 to reduce $Cr^{6+}$ to $Cr^{3+}$ in a process of removal of $Cr^{6+}$-compounds from civil and industrial wastes.

**Fig. 1**

## Description

The present invention relates to a method for the removal of $Cr^{6+}$-compounds from industrial and civil wastes.

As well known, $Cr^{6+}$-compounds are produced in large amount by many industries, namely galvanic industry, steel works, etc. and are found as a liquid or solid waste by-products in the wastes from plating baths, in the dusts recovered from steel works smokes and other solid or liquid wastes.

Since $Cr^{6+}$-compounds are very noxious, the solid or liquid wastes containing them must be suitably processed to avoid environmental pollution.

The only known, presently used method of processing solid or liquid wastes containing $Cr^{6+}$-compounds is the direct reduction of $Cr^{6+}$-compounds to not noxious $Cr^{3+}$-compounds by means of sulphur dioxide ($SO_2$) as reducing agent, which is developped from sodium bisulphite in an acid bath (pH=2-3). However according to this process a large amount of $SO_2$ is produced which only partly is used as reducing agent, while a significant part of it is released to the working environment and to the atmosphere thereby involving a serious pollution problem. So, for instance, to process 10 $m^3$ of a chromium plating baths exhausted solution containing 5Kg/$m^3$ of $Cr^{6+}$, there are used 70 Kg of sulphuric acid and 150 Kg of sodium bisulphite with a production of 32 $m^3$ of gaseous $SO_2$ to take part to the $Cr^{6+}$ reduction reaction, the excess escaping to the surrounding environment. Furthermore, in addition to the pollution problem, the $Cr^{6+}$ reduction process using $SO_2$, due to the severe acid conditions in which has to be carried out, involves the use of acid resistant equipment to avoid rapid corrosion, acid spilling, accident, etc..

The object of the present invention is to provide a method for performing the reduction of $Cr^{6+}$ to $Cr^{3+}$ in a safe and not polluting way and using less severe process conditions requiring less expensive equipment.

According to the method of the invention, as a reducing agent a water soluble bivalent iron compound is used, and the reduction reaction is conducted at a pH higher than 5.0.

Preferably the water soluble bivalent iron compound is ferrous sulphate ($FeSO_4 \cdot 7H_2O$) either as a 20-30% water solution or in the solid state and the pH is higher than 6 and in particular in the range of 6 to 8.

Several other bivalent iron compounds other than ferrous sulphate can be used as an alternative such as ferrous chloride ($FeCl_2 \cdot 4H_2O$), ferrous acetate ($Fe(CH_3COO)_2 \cdot 4H_2O$) and the like, in particular as a 50% water solution.

It is already known that ferrous sulphate performs a complete reduction of $Cr^{6+}$- to $Cr^{3+}$-salts. Important analytical methods (e.g. water COD calculation) are based on this reaction. However the reaction is carried out in highly acid solution (pH < 1), whereby it is unpractical for industrial purposes due to the problems of corrosion, safety, acid wastes, etc. which are involved.

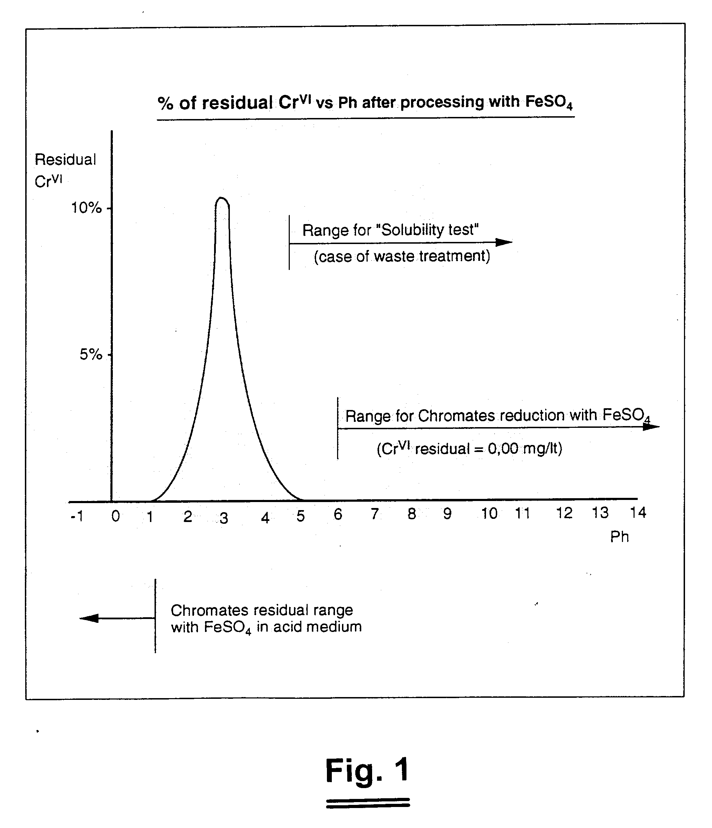

We have found, however, that the same results (i.e. a 100% reduction of $Cr^{6+}$ to $Cr^{3+)}$ can be obtained even operating at a pH higher than 5 and in particular under neutral or slightly alkaline condition. What is important is to avoid operating at pH values comprised between 1 and 5, where, as shown in the diagram of Fig 1, the reduction is not complete, to obtain the same result as at pH < 1, according the already known reaction:

$$3Fe^{2+} + Cr^{6+} \rightarrow 3Fe^{3+} + Cr^{3+}$$

The ratio $FeSO_4 \cdot 7H_2O/Cr^{6+}$ is therefore the stechiometric one, i.e. 16/1.

According to the above reaction a brown precipitate is obtained, which, after settling, releases a clear, smell-free liquid containing no residues of $Cr^{6+}$-compounds. The settled product can easily be pumped away with no need for heating and according to the Italian Law, can be classified as "Special Waste-not toxic-harmless".

From the foregoing, it appears that the method according to the present invention can be advantageously applied to:

a) reduction of $Cr^{6+}$-compounds which are already in solution;

b) reduction of solid $Cr^{6+}$ compounds which can be solubilized in water or other solvent.

Thus the method of the invention has been already satisfactory tested in the following cases which are given by way of not limiting examples only.

### 1. Solutions resulting from chromium baths or tanks

As known, the above solutions may have a low $Cr^{6+}$ concentration (in the range of few g/l) or exceed 200 g/l when coming from exhausted baths. In both cases the $Fe^{2+}$ compound, in particular ferrous sulphate, can be added either as an acqueous solution or as solid particles under mechanical agitation.

The use of solid ferrous sulphate is preferred in this case due to the following advantage:

- no need of adding water;

- immediate addition of the required amount of the reduction reagent without taking into account of its solubility limits due to the fact that it quickly reacts with $Cr^{6+}$ and therefore disappears from the solution.

### 2. Solid wastes contaning $PbCrO_4$

This is the case for instance of solid wastes from Pb-anodes in chromium plating baths. $PbCrO_4$ is a well knwon "insoluble residue" when operating under acid conditions, but it is soluble in an alkaline medium. Therefore, it is sufficient to put the $PbCrO_4$- containing waste

in an alkaline bath for few hours, for example a bath containing a 5% NaOH solution to solubilize it and then add ferrous sulphate in a 20-30% solution or in solid form. In this case the reaction takes place at pH > 11.

### 3. Elimination of $Cr^{6+}$ contamination

In case of $Cr^{6+}$-compounds spillages on floors, ground, etc. the part of solid $Cr^{6+}$ compounds (if any) are first solubilized with a 5% alkaline (e.g. NaOH) solution. Then a 20-30% solution of ferrous sulphate is sprayed on the $Cr^{6+}$ polluted area to reduce $Cr^{6+}$ to $Cr^{3+}$.

### 4. Dust from steel-works gaseous waste treating plants.

The method of the invention was used to treat dusts containing about 3Kg/t of solid, water-soluble $Cr^{6+}$.

Taking into account that the solubilization of the $Cr^{6+}$-compounds is slow because they are included in other substances, the reduction reaction has been carried out in two different ways:

a) moistening the dusts with about 20% of water and letting them to rest for some days, then adding solid $FeSO_4.7HO$ (50 Kg/t approx) under mechanical stirring.

The ferrous sulphate, while going into solution, reacted with the already dissolved $Cr^{6+}$ to give $Fe(OH)_3$.

b) adding to the dusts 50 Kg/t approx of solid ferrous sulphate under mixing and at the same time moistening the mixture with 20% of water.

As $Cr^{6+}$-compounds go into solution, they find the already dissolved ferrous sulphate and react with it.

It has to be noted that in both ways it is not important to take into account of the solubility product of the ferrous sulphate in so far as insoluble ferric hydroxide is formed by reduction reaction.

### 5. Land decontamination

Presently the removal of $Cr^{6+}$-compounds dispersed in the ground involves complex and expensive processes. In fact, it is necessary to pump out the polluted water bed as it is not possible to acidify the ground in order to carry out -in situ- a treatment with sodium bisulphite. On the other hand the in situ treatment with ferrous sulphate is possible according to the method of the invention since the reaction takes place at the same pH range as the soil.

The product comprising or consisting of a water soluble, ferrous salt to be used for the reduction of $Cr^{6+}$ to $Cr^{3+}$ at pH > 5 according to the method of the invention can be put on the market as a solid, such as powder or granules, or as a liquid such as a solution, for example, a 20-30% solution if ferrous sulphate is used as a ferrous salt.

### Claims

1. A method for the removal of $Cr^{6+}$-compounds from civil and industrial waste materials characterized in that said materials are reacted with an at least stochiometric amount of a ferrous ($Fe^{2+}$) salt at a pH > 5, whereby $Cr^{6+}$ is completely reduced to $Cr^{3+}$

2. The method according to claim 1, wherein the reaction is carried out at a pH comprised between 6 and 8.

3. The method according to the previous claims, wherein the ferrous ($Fe^{2+}$) salt is ferrous sulphate.

4. The method according to claims 1 and 2, wherein said ferrous ($Fe^{2+}$) salt is selected from ferrous acetate and ferrous chloride.

5. The method according to the previous claims, wherein, when said materials are in liquid form, after addition of ferrous salt an alcalizing agent is added to the reaction mixture.

6. The method according to claims 1-4, wherein, when said materials are in solid form, an alkaline solubilizing agent is added before the addition of the ferrous salt.

7. A ferrous ($Fe^{2+}$) salt as reducing agent of $Cr^{6+}$ to $Cr^{3+}$ at pH > 5 in a process for the removal of $Cr^{6+}$-compounds from civil and industrial waste material.

**% of residual Cr$^{VI}$ vs Ph after processing with FeSO$_4$**

Residual Cr$^{VI}$

10%

Range for "Solubility test"

(case of waste treatment)

5%

Range for Chromates reduction with FeSO$_4$

(Cr$^{VI}$ residual = 0,00 mg/lt)

-1  0  1  2  3  4  5  6  7  8  9  10  11  12  13  14

Ph

Chromates residual range
with FeSO$_4$ in acid medium

# Fig. 1